# EUROPEAN PATENT APPLICATION

(11) **EP 3 509 059 A1**
(43) Date of publication of application: **10.07.2019**
(21) Application number: 17846145.5
(22) Date of filing: 17.08.2017
(51) Int. Cl.: G10L 15/22

(54) **INFORMATION PROCESSING DEVICE AND INFORMATION PROCESSING METHOD**

(30) Priority: 31.08.2016 JP 2016170245
(71) Applicant: Sony Corporation, Tokyo 108-0075 (JP)
(72) Inventor: TAKI Yuhei, Tokyo 108-0075 (JP); KAWANO Shinichi, Tokyo 108-0075 (JP)
(74) Representative: MFG Patentanwälte Meyer-Wildhagen Meggle-Freund Gerhard PartG mbB
(86) International application number: PCT/JP2017/029491
(87) International publication number: WO 2018/043137

(57) **Abstract**

The present technology relates to an information processing apparatus and an information processing method that permit speedy acquisition of a desired voice recognition result.

An information processing apparatus includes a voice recognition section that performs voice recognition of a recognition target phrase, a phrase to be recognized, on the basis of an input voice representing the recognition target phrase and phrase information including at least one of a preceding phrase, a phrase previous to the recognition target phrase, or a succeeding phrase, a phrase following the recognition target, in a sentence including the recognition target phrase. The present technology is applicable, for example, to an apparatus that uses voice recognition.

## Description

### [Technical Field]

The present technology relates to an information processing apparatus and an information processing method and particularly to an information processing apparatus and an information processing method that permit speedy acquisition of a desired voice recognition result.

### [Background Art]

Car navigation systems have been proposed, in a case where a place name is input by voice, to date that exclude from candidates a place name that has been determined to have been erroneously recognized in previous voice recognition when voice is input again following acquisition of an undesired result (refer, for example, to PTL 1) .

### [Citation List]

### [Patent Literature]

[PTL 1]
Japanese Patent Laid-Open No. Hei 10-39892

### [Summary]

### [Technical Problem]

In the technology described in PTL 1, however, the erroneously recognized place name as a whole is excluded from candidates, and at the same time, a user needs to input a place name as a whole by voice again. For example, therefore, in the case where the technology described in PTL 1 is applied to ordinary sentence voice recognition, an erroneously recognized sentence as a whole is excluded from candidates. As a result, if the sentence is long with a number of erroneously recognized phrases, the user needs to input the same sentence a number of times until all the phrases are correctly recognized.

Therefore, it is an object of the present technology to permit speedy acquisition of desired voice recognition results.

### [Solution to Problem]

An information processing apparatus of a first aspect of the present technology includes a voice recognition section that performs voice recognition of a recognition target phrase, a phrase to be recognized, on the basis of an input voice representing the recognition target phrase and phrase information including at least one of a preceding phrase, a phrase previous to the recognition target phrase, or a succeeding phrase, a phrase following the recognition target, in a sentence including the recognition target phrase.

The recognition target phrase can be a phrase to be inserted in a portion subject to correction in a sentence presented as a recognition result of previous voice recognition, and the preceding phrase can be a phrase previous to the portion subject to correction, and the succeeding phrase can be a phrase following the portion subject to correction.

The phrase information can further include an exclusion phrase, a phrase to be excluded from a voice recognition result.

The exclusion phrase can be a phrase determined to have been erroneously recognized as the recognition target phrase in the previous voice recognition.

A communication section can be further provided that receives related information including the phrase information and the input voice from other information processing apparatus and sends a voice recognition result to the other information processing apparatus.

The related information can further include at least one of context information regarding context that uses voice recognition in the other information processing apparatus, user information regarding a user using voice recognition, or system information regarding a system that inputs a voice, and the voice recognition section can perform voice recognition further on the basis of at least one of the context information, the user information, or the system information.

The context information can include at least one of information regarding an intended use of voice recognition, a position of the other information processing apparatus, or a current time.

The user information can include at least one of information for identifying the user, information representing a behavior of the user, or information representing an emotion of the user.

The system information can include at least one of a type of the other information processing apparatus or a configuration of a voice input system of the other information processing apparatus.

The voice recognition section can be caused to select at least one of an acoustic model or a language model to be used on the basis of at least one of the context information, the user information, or the system information.

A learning section can be further provided that learns a tendency of the user's recognition result on the basis of a history of execution of the user's voice recognition, and the voice recognition section can be caused to perform voice recognition further on the basis of a learning result of the learning section.

The voice recognition section can be caused to select a final recognition result on the basis of relevance between each candidate acquired as a voice recognition result of the recognition target phrase and at least one of the preceding phrase or the succeeding phrase.

An information processing method of the first aspect of the present technology includes a voice recognition step that performs voice recognition of a recognition target phrase, a phrase to be recognized, on the basis of an input voice representing the recognition target phrase and phrase information including at least one of a preceding phrase, a phrase previous to the recognition target phrase, or a succeeding phrase, a phrase following the recognition target, in a sentence including the recognition target phrase.

An information processing apparatus of a second aspect of the present technology includes a communication section and a presentation control section. The communication section sends, to other information processing apparatus, an input voice representing a recognition target phrase, a phrase to be recognized, and phrase information including at least one of a preceding phrase, a phrase previous to the recognition target phrase, or a succeeding phrase, a phrase following the recognition target phrase, in a sentence including the recognition target phrase and receives, from the other information processing apparatus, a voice recognition result of the recognition target phrase. The presentation control section controls the presentation of the recognition result.

The recognition target phrase can be a phrase to be inserted in a portion subject to correction in a sentence presented as a recognition result of previous voice recognition, and the preceding phrase can be a phrase previous to the portion subject to correction, and the succeeding phrase can be a phrase following the portion subject to correction.

An information processing method of the second aspect of the present technology includes a transmission control step, a reception control step, and a presentation control step. The transmission control step controls the transmission, to other information processing apparatus, of an input voice representing a recognition target phrase, a phrase to be recognized, and phrase information including at least one of a preceding phrase, a phrase previous to the recognition target phrase, or a succeeding phrase, a phrase following the recognition target phrase, in a sentence including the recognition target phrase. The reception control step controls the reception, from the other information processing apparatus, of a voice recognition result of the recognition target phrase. The presentation control step controls the presentation of the recognition result.

In the first aspect of the present technology, voice recognition of a recognition target phrase, a phrase to be recognized, is performed on the basis of an input voice representing the recognition target phrase and phrase information including at least one of a preceding phrase, a phrase previous to the recognition target phrase, or a succeeding phrase, a phrase following the recognition target, in a sentence including the recognition target phrase.

In the second aspect of the present technology, an input voice and phrase information are sent to other information processing apparatus. The input voice represents a recognition target phrase, a phrase to be recognized. The phrase information includes at least one of a preceding phrase, a phrase previous to the recognition target phrase, or a succeeding phrase, a phrase following the recognition target phrase, in a sentence including the recognition target phrase. A voice recognition result of the recognition target phrase is received from the other information processing apparatus. The presentation of the recognition result is controlled.

### [Advantageous Effect]

According to the first or second aspect of the present technology, it is possible to recognize voice. In particular, according to the first or second aspect, it is possible to speedily acquire a desired voice recognition result.

It should be noted that the effect described here is not necessarily limited and may be any one of the effects described in the present disclosure.

### [Brief Description of Drawings]

Fig. 1 is a block diagram illustrating an embodiment of an information processing system to which the present technology is applied.
Fig. 2 is a flowchart for describing client processes.
Fig. 3 is a diagram illustrating an example of a voice recognition start API.
Fig. 4 is a diagram illustrating an example of a related information provision API.
Fig. 5 is a diagram illustrating examples of other related APIs.
Fig. 6 is a diagram illustrating an example of a recognition result return API.
Fig. 7 is a diagram illustrating an example of a recognition result presentation method.
Fig. 8 is a diagram illustrating an example of an argument of the voice recognition start API.
Fig. 9 is a diagram illustrating an example of the recognition result presentation method.
Fig. 10 is a diagram illustrating an example of an input screen in manual input mode.
Fig. 11 is a diagram illustrating an example of an input screen in select mode.
Fig. 12 is a diagram illustrating an example of an input screen in single character input mode.
Fig. 13 is a diagram illustrating an example of a learning data provision API.
Fig. 14 is a flowchart for describing server processes.
Fig. 15 is a diagram for describing a specific example of a voice recognition process.
Fig. 16 is a diagram for describing a specific example of the voice recognition process.
Fig. 17 is a diagram illustrating an example of a data structure of a conversion filter.
Fig. 18 is a diagram illustrating an example of a data structure of a voice recognition history.
Fig. 19 is a block diagram illustrating a configuration example of a computer.

### [Description of Embodiment]

A detailed description will be given below of a mode for carrying out the invention (hereinafter denoted as an "embodiment") using drawings. It should be noted that the description will be given in the following order:
1. Embodiment
2. Modification examples
3. Application example

### <<1. Embodiment>>

### <1-1. Configuration Example of the Information Processing System>

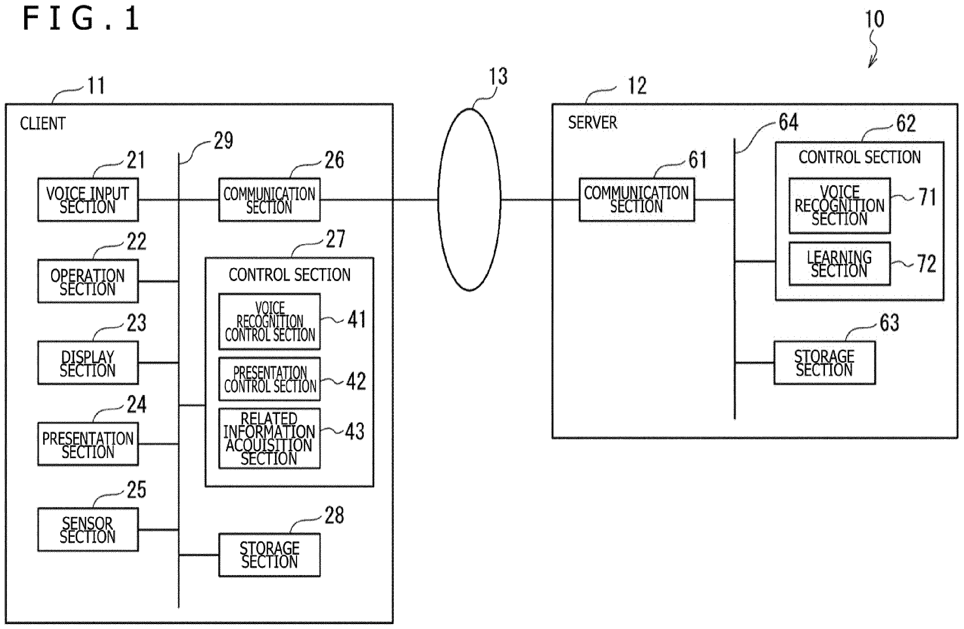

A description will be given first of a configuration example of an information processing system 10 to which the present technology is applied with reference to Fig. 1.

The information processing system 10 is a system that performs voice recognition of an input voice input by a user and presents a recognition result. The information processing system 10 includes a client 11, a server 12, and a network 13. The client 11 and the server 12 are connected to each other via the network 13.

It should be noted that, although only one client 11 is depicted in Fig. 1, the plurality of clients 11 are actually connected to the network 13, thereby allowing a plurality of users to use the information processing system 10 via the client 11.

The client 11 sends the input voice input by the user to the server 12 and receives a voice recognition result for the input voice from the server 12 for presentation.

For example, the client 11 includes a smartphone, a tablet, a wearable device, a desktop personal computer, a game console, a video reproduction apparatus, a music reproduction apparatus, or other apparatus. Also, a variety of schemes can be used for a wearable device such as glass type, watch type, bracelet type, necklace type, neck band type, earphone type, headset type, and headmount type.

The client 11 includes a voice input section 21, an operation section 22, a display section 23, a presentation section 24, a sensor section, a communication section 26, a control section 27, and a storage section 28. The control section 27 includes a voice recognition control section 41, a presentation control section 42, and a related information acquisition section 43. The voice input section 21, the operation section 22, the display section 23, the presentation section 24, the sensor section 25, the communication section 26, the control section 27, and the storage section 28 are connected to each other via a bus 29.

The voice input section 21 includes, for example, a microphone. The number of microphones can be specified at will. The voice input section 21 collects voice and other sounds produced by the user, supplies voice data representing the collected voice to the control section 27, and causes the voice data to be stored in the storage section 28.

The operation section 22 includes a variety of operating members and is used for operation of the client 11. For example, the operation section 22 includes a controller, a remote controller, a touch panel, hardware buttons, and so on.

The display section 23 includes, for example, a display. The display section 23 displays, under control of the presentation control section 42, images such as a screen depicting a voice recognition result, a GUI (Graphical User Interface), and screens for various application programs and services.

The presentation section 24 includes, for example, a speaker, an oscillating device, and other coordinating devices. The presentation section 24 presents a voice recognition result and other information under control of the presentation control section 42.

The sensor section 25 includes a variety of sensors such as camera, distance sensor, GPS (Global Positioning System) receiver, acceleration sensor, gyro sensor, and biological information sensor. The sensor section 25 supplies, to the control section 27, sensor data representing detection results of the respective sensors and causes the sensor data to be stored in the storage section 28.

The communication section 26 includes a variety of communication devices. The communication scheme of the communication section 26 is not specifically restricted, and both wireless communication and wired communication can be used. Also, the communication section 26 may support a plurality of communication schemes. The communication section 26 communicates with the server 12 via the network 13 for exchange of various data. The communication section 26 supplies, to the control section 27, data received from the server 12 and causes the data to be stored in the storage section 28.

The control section 27 includes, for example, a variety of processors and so on.

The voice recognition control section 41 acquires data, such as voice data and related information, required for processes handled by a voice recognition section 71 of the server 12 and sends the data to the server 12 via the communication section 26 and the network 13. Also, the voice recognition control section 41 receives a voice recognition result and other data from the server 12 via the communication section 26 and the network 13.

The presentation control section 42 controls the presentation of various pieces of information by the display section 23 and the presentation section 24.

The information acquisition section 43 acquires related information on the basis of voice data supplied from the voice input section 21, a user operation performed on the operation section 22, sensor data supplied from the sensor section 25, the program executed by the control section 27, and so on. Here, the term "related information" refers to information related to and used for voice recognition.

The storage section 28 stores programs, data and other information required for the client 11 to perform its processes.

The server 12 performs voice recognition of the input voice received from the client 11 and sends the recognition result to the client 11 via the network 13. The server 12 includes a communication section 61, a control section 62, and a storage section 63. The control section 62 includes the voice recognition section 71 and a learning section 72. The communication section 61, the control section 62, and the storage section 63 are connected to each other via a bus 64.

The communication section 61 includes a variety of communication devices. The communication scheme of the communication section 61 is not specifically restricted, and both wireless communication and wired communication can be used. Also, the communication section 61 may support a plurality of communication schemes. The communication section 61 communicates with the client 11 via the network 13 for exchange of various data. The communication section 61 supplies, to the control section 62, data received from the client 11 and causes the data to be stored in the storage section 63.

The control section 62 includes, for example, a variety of processors and so on.

The voice recognition section 71 performs voice recognition of the input voice received from the client 11.

The learning section 72 generates a history of execution of each user's voice recognition (hereinafter referred to as voice recognition history) and causes the data to be stored in the storage section 63. Also, the learning section 72 learns, for example, to optimize a voice recognition process by the voice recognition section 71 on the basis of a voice recognition history of each user.

The storage section 63 stores programs, data and other information required for the server 12 to perform its processes.

It should be noted that the wording "via the network 13" in the case of communication between the client 11 (communication section 26) and the server 12 (communication section 61) via the network 13 will be hereinafter omitted. The wording "via the bus 29" in the case of data exchange by each section of the client 11 via the bus 29 will be hereinafter omitted. The wording "via the bus 64" in the case of data exchange by each section of the server 12 via the bus 64 will be hereinafter omitted.

### <1-2. Processes Performed by the Information Processing System 10>

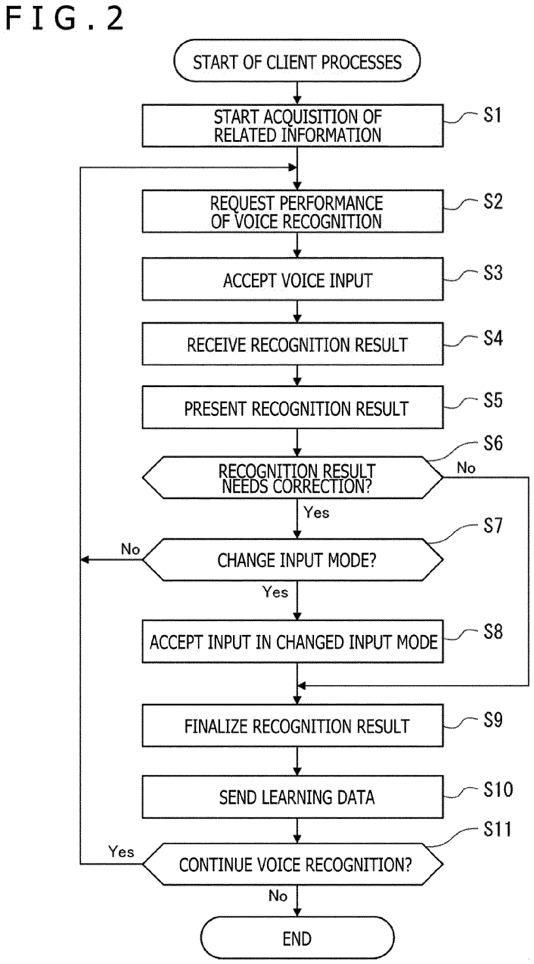

A description will be given next of the processes performed by the information processing system 10 with reference to Figs. 2 to 18.

### (Processes of the Client 11)

A description will be given first of the processes of the client 11 with reference to the flowchart illustrated in Fig. 2. It should be noted that these processes are initiated, for example, when the user inputs an instruction to perform voice recognition via the operation section 22.

In step S1, the related information acquisition section 43 initiates the acquisition of related information on the basis of voice data supplied from the voice input section 21, a user operation performed on the operation section 22, sensor data supplied from the sensor section 25, the program executed by the control section 27, and so on. Examples of related information will be cited below.

For example, related information includes one or more of voice recognition information regarding voice recognition result and so on, context information regarding context that uses voice recognition in the client 11, user information regarding the user using voice recognition, or system information regarding a system that inputs voice.

Voice recognition information includes, for example, one or more of phrase information including one or more of exclusion phrase, preceding phrase, or succeeding phrase, or the number of attempts of voice recognition.

An exclusion phrase is a phrase to be excluded from a voice recognition result, and a phrase determined to have been erroneously recognized in voice recognition performed earlier in the same session, for example, is set. Here, the term "same session" refers to a session from the beginning of voice recognition of a sentence to the end of voice recognition of the sentence due, for example, to finalization or suspension of the recognition result.

A preceding phrase is a phrase inserted in a portion subject to correction in the case of correction of a sentence acquired as a voice recognition result (hereinafter referred to as a recognized sentence) and is a phrase previous to a phrase subject to voice recognition (hereinafter referred to as a recognition target phrase) (phrase preceding the portion subject to correction), and a succeeding phrase is a phrase following the recognition target phrase (phrase succeeding the portion subject to correction). It should be noted that each of the recognition target phrase, the preceding phrase, and the succeeding phrase may include a plurality of words. Also, a recognized sentence need not necessarily be a complete sentence and may be, for example, an arrangement of one or more words that are not included in a complete sentence. Alternatively, a recognized sentence may include two or more sentences.

The number of attempts of voice recognition refers to the number of times voice recognition has been attempted within the same voice recognition session.

It should be noted that the acquisition of voice recognition information is initiated after the acquisition of a voice recognition result in step S4 which will be described later.

Context information includes, for example, one or more of information regarding an intended use of voice recognition, position information regarding the current position of the client 11, or current time.

Information regarding an intended use of voice recognition includes, for example, types of application programs and services that use voice recognition (e.g., web search, mail, chat, and so on).

Position information regarding the current position of the client 11 may be represented, for example, by specific longitude and latitude, place name, and so on, or by type of location such as station, underground shopping area, forest, high-rise area, and so on.

User information includes, for example, at least one of a user ID identifying the user, behavior information representing the user's current behavior (e.g., walking, staying still, in transit by car, seated, and so on), or emotional information representing the user's current emotion (e.g., angry, sad, joyful, and so on).

System information includes one or more of type of the client 11 (e.g., smartphone, tablet, mobile phone, personal computer, wearable device, and so on) or information regarding configuration of the voice input system of the client 11.

Information regarding configuration of the voice input system of the client 11 includes, for example, microphone type, number of microphones, distance between the microphone and the user's mouth, software used for voice recognition, and so on.

Also, related information includes session information defining an expiration date of each piece of information included in related information.

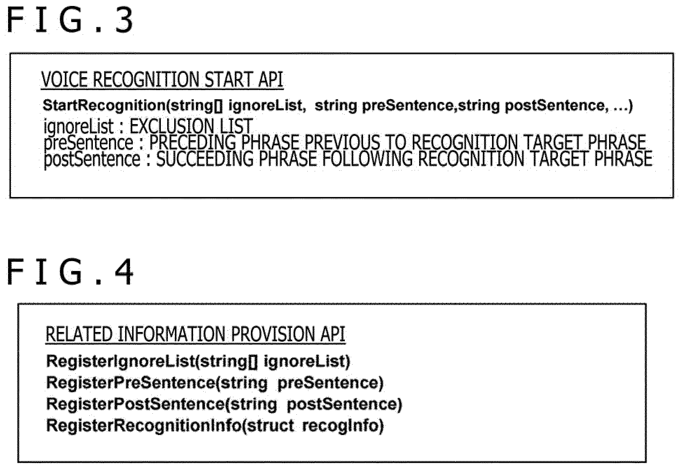

In step S2, the voice recognition control section 41 requests the server 12 to perform voice recognition via the communication section 26. Also, the voice recognition control section 41 provides related information via the communication section 26 as necessary. For example, the performance of voice recognition is requested and various pieces of related information are provided from the client 11 to the server 12 (the voice recognition section 71 thereof) by using APIs (Application Programming Interfaces). A description will be given here of examples of such APIs referring to Figs. 3 to 5.

Fig. 3 is a diagram illustrating an example of StartRecognition(), an API for instructing the server 12 to start voice recognition.

StartRecognition() takes arguments for providing related information to the server 12 such as ignoreList, a character string array type, preSentence, a character string type, and postSentence, a character string type. For example, an exclusion list including one or more exclusion phrases is set for ignoreList. A preceding phrase previous to a recognition target phrase is set for preSentence. A succeeding phrase following the recognition target phrase is set for postSentence.

It should be noted that in the case where related information regarding a type other than the above is provided, an argument is further added. Alternatively, a plurality of pieces of related information may be provided together by using an argument of a structure.

Fig. 4 illustrates an example of an API for providing related information to the server 12.

RegisterIgnoreList() is an API that takes ignoreList, a character string array type, as an argument to provide an exclusion list.

RegisterPreSentence() is an API that takes preSentence, a character string type, as an argument to provide a preceding phrase.

RegisterPostSentence() is an API that takes postSentence, a character string type, as an argument to provide a succeeding phrase.

RegisterRecognitionInfo() is an API that takes recogInfo, a structure type, as an argument to provide a plurality of pieces of related information together.

By using these APIs, it is possible to provide related information to the server 12 at any timing different from the timing when StartRecognition() is executed.

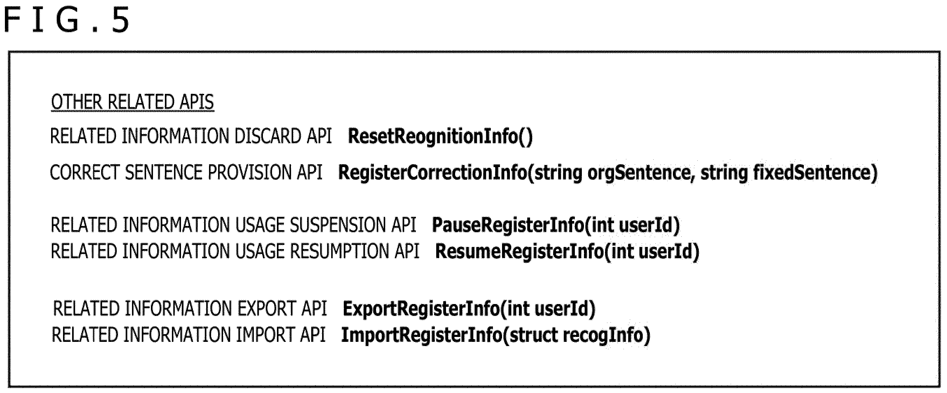

Fig. 5 is a diagram illustrating examples of other APIs regarding related information.

ResetReognitionInfo() is an API for instructing the server 12 to discard related information that was provided previously.

RegisterCorrectionInfo() is an API for providing a correct sentence to the server 12. RegisterCorrectionInfo() takes orgSentence and fixedSentence, character string types, as arguments. A recognized sentence before correction recognized by the first voice recognition is set for orgSentence. A correct sentence finally acquired by correcting the recognized sentence is set for fixedSentence.

PauseRegisterInfo() is an API for temporarily suspending the use of related information. PauseRegisterInfo() takes userId, an integer type, as an argument. The user ID of a user whose use of related information will be suspended is set for userId.

ResumeRegisterInfo() is an API for resuming the use of related information. ResumeRegisterInfo() takes userId, an integer type, as an argument. The user ID of a user whose use of related information will be resumed is set for userId.

ExportRegisterInfo() is an API for exporting related information. ExportRegisterInfo() takes userId, an integer type, as an argument. Therefore, related information of the user indicated by userId is exported by ExportRegisterInfo().

ImportRegisterInfo() is an API for importing related information accumulated in the storage section 28 of the client 11 or the storage section 63 of the server 12. ImportRegisterInfo() takes recogInfo, a structure type, as an argument. Related information to be imported is set for recogInfo.

ExportRegisterInfo() and ImportRegisterInfo() allow for use of past related information of the user and use of related information of other user.

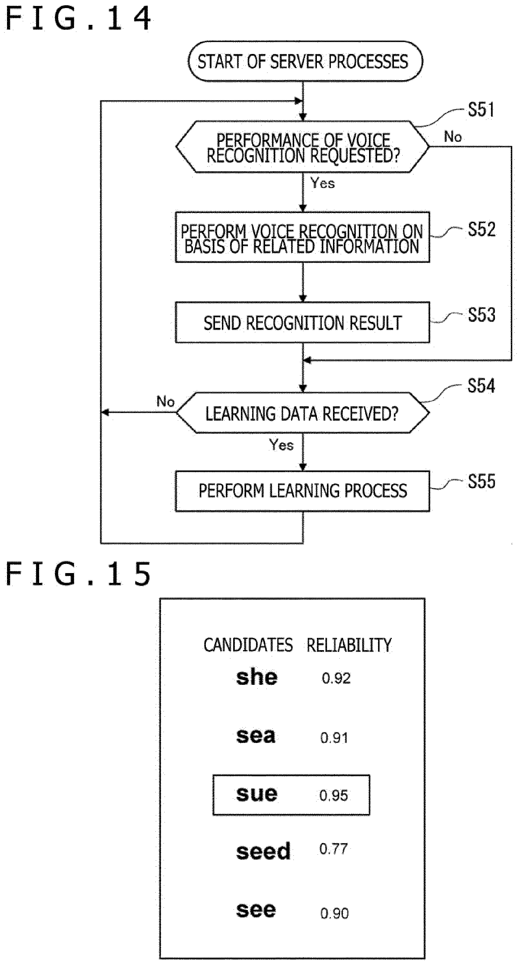

The server 12 receives a request from the client 11 to perform voice recognition in step S51 of Fig. 14 which will be described later.

In step S3, the client 11 accepts voice input. For example, the presentation control section 42 prompts the user to input a voice by controlling the display section 23 or the presentation section 24. Then, the voice recognition control section 41 acquires voice data representing the input voice input to the voice input section 21 by the user and sends the voice data to the server 12 via the communication section 26.

The server 12 receives the voice data and performs voice recognition on the basis of voice data in step S52 of Fig. 4 which will be described later and sends a recognition result to the client 11 in step S53.

In step S4, the voice recognition control section 41 receives the recognition result via the communication section 26.

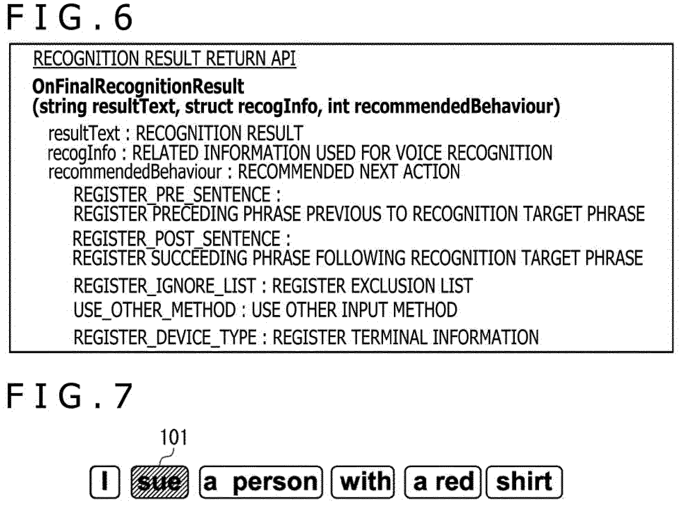

Fig. 6 illustrates an example of OnFinalRecognitionResult(), an API for returning a voice recognition result from the server 12 to the client 11. OnFinalRecognitionResult() is called, for example, as a callback function by the voice recognition section 71 of the server 12.

OnFinalRecognitionResult() takes, resultText, a character string type, recogInfo, a structure type, and recommendedBehaviour, an integer type, as arguments.

Text data representing the voice recognition result is set for resultText. It should be noted that, for example, it may be possible to set, for resultText, a plurality of phrase candidates acquired as the recognition result and reliability for each of the candidates.

Related information used for voice recognition is set for recogInfo.

A constant representing a recommended next action of the client 11 is set for recommendedBehaviour. For example, a constant such as REGISTER_PRE_SENTENCE, REGISTER_POST_SENTENCE, RESISTER_IGNORE_LIST, USE_OTHER_METHOD, or REGISTER_DEVICE_TYPE is set for recommendedBehaviour. REGISTER_PRE_SENTENCE is set for the case where the registration of a preceding phrase previous to a recognition target phrase is recommended. REGISTER_POST_SENTENCE is set for the case where the registration of a succeeding phrase following the recognition target phrase is recommended. RESISTER IGNORE LIST is set for the case where the registration of an exclusion list is recommended. USE_OTHER_METHOD is set for the case where the use of other input method is recommended. REGISTER_DEVICE_TYPE is set for the case where the registration of the type of the client 11 is recommended.

It should be noted that it may be possible to set, for recommendedBehaviour, a constant that combines a plurality of actions so that the plurality of actions can be recommended all at once.

For example, the voice recognition control section 41 receives the recognition result from the server 12 via resultText, recogInfo, and recommendedBehaviour, the arguments of OnFinalRecognitionResult().

In step S5, the display section 23 presents the recognition result under control of the presentation control section 42.

Fig. 7 illustrates an example of a recognition result presentation method. More specifically, Fig. 7 illustrates an example of a recognition result presentation method when "I sue a person with a red shirt," a recognition result (recognized sentence), is acquired in the case where the user inputs a voice saying "I see a person with a red shirt."

In this example, the recognized sentence is presented in such a manner as to be punctuated into units of words, sets of an article and a word, or sets of a possessive case and a word. Also, a correctable unit of the recognized sentence (hereinafter referred to as a correction unit) is defined. That is, the recognized sentence is divided into a plurality of correction units as a result of punctuation of the recognized sentence. The user can select a desired correction unit in the recognized sentence by moving a cursor 101 via the operation section 22.

In step S6, the voice recognition control section 41 determines whether or not the recognized result needs correction. For example, in the case where the user performed an operation to correct the recognized sentence via the operation section 22, the voice recognition control section 41 determines that the recognition result needs correction, and the process proceeds to step S7.

For example, in the case where the user deletes the phrase at the position of the cursor 101 via the operation section 22 in the example illustrated in Fig. 7 described above, it is determined that the recognition result needs correction, and the process proceeds to step S7. At this time, the voice recognition control section 41 recognizes that the deleted phrase is an erroneously recognized phrase and sets the deleted phrase as a correction target.

In step S7, the voice recognition control section 41 determines whether or not to change the input mode. For example, in the case where USE_OTHER_METHOD is not set for recommendedBehaviour, an argument of OnFinalRecognitionResult() described above, the voice recognition control section 41 determines that the input mode will not be changed, and the process returns to step S2.

Thereafter, the processes from step S2 to step S7 are repeated for correction of the recognition result until it is determined in step S2 that the recognition result does not need correction or until it is determined in step S7 that the input mode will be changed.

A description will be given here of a specific example of a recognition result correction process with reference to Figs. 7 to 9.

For example, in the example of Fig. 7 described above, the user determines that "sue" in the presented recognized sentence is wrong, and in the case where the user makes a correction, the user moves the cursor 101 to the "sue" position and deletes "sue." Then, the user performs,via the operation section 22, an operation to input a voice saying the phrase (recognition target phrase) that replaces "sue" that has been deleted.

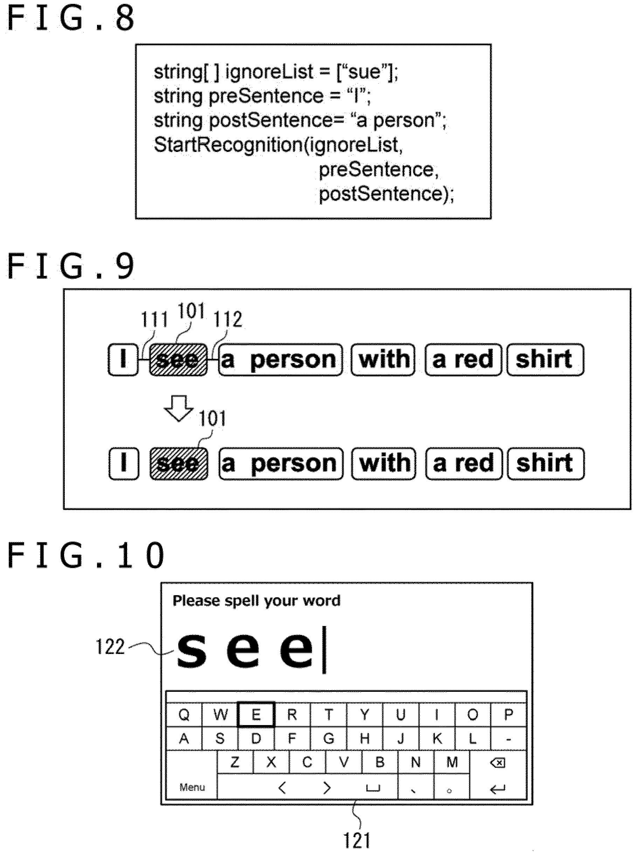

At this time, for example, the voice recognition control section 41 sets related information for the arguments of StartRecognition() as illustrated in Fig. 8 and executes StartRecognition().

Specifically, an exclusion list including "sue" that has been deleted from the recognition result is set for ignoreList. This allows "sue" to be excluded from voice recognition results in the server 12.

Also, "I," the preceding phrase previous to "sue" that has been deleted is set for preSentence, and "a person," the succeeding phrase following "sue" that has been deleted is set for postSentence. Then, as will be described later, recognition accuracy improves thanks to voice recognition using the preceding phrase and the succeeding phrase.

It should be noted that in the case where a recognition target phrase is provided at the beginning of a sentence, NULL, for example, is set for preSentence to indicate the absence of a preceding phrase. In the case where a recognition target phrase is provided at the end of a sentence, NULL, for example, is set for preSentence to indicate the absence of a succeeding phrase.

Then, the user inputs a voice saying "see," the correct phrase to be inserted in place of "sue." The client 11 sends voice data representing the input voice to the server 12 and receives, from the server 12, a voice recognition result regarding the recognition target phrase represented by the input voice.

Fig. 9 illustrates an example of a recognition result presentation method in the case where "see" is acquired as a voice recognition result.

For example, "see" acquired as a recognition result is displayed where "sue" was displayed in the example illustrated in Fig. 7. Also, the cursor 101 is displayed at the position of "see." Further, in order to notify the user that "I," the preceding phrase previous to "see," was used to identify "see," a line 111 connecting "I" and "see" is displayed. Similarly, in order to notify the user that "a person," the succeeding phrase following "see," was used to identify "see," a line 112 connecting "see" and "a person" is displayed. The line 111 and the line 112 are displayed immediately after the presentation of the recognition result and will disappear after a while.

It should be noted that in the case where a plurality of correction units in a recognized sentence are corrected, it is only necessary to perform similar processes for each correction unit to be corrected for correction of the recognized sentence. It should be noted, however, that in the case where correction units to be corrected are adjacent to each other, it is possible to input a voice of the adjacent correction units all at once and correct these units all at once.

Referring back to Fig. 2, on the other hand, in the case where USE_OTHER_METHOD is set, for example, for recommendedBehaviour, an argument of OnFinalRecognitionResult(), the voice recognition control section 41 determines in step S7 that the input mode will be changed, and the process proceeds to step S8.

In step S8, the client 11 accepts an input in a changed input mode. For example, the voice recognition control section 41 selects one of manual input mode, select mode, and single character input mode. The presentation control section 42 causes an input screen corresponding to the selected mode to be displayed on the display section 23.

Fig. 10 illustrates an example of an input screen corresponding to the manual input mode. A keyboard 121 and a display section 122 appear on this input screen. Then, a character string input using the keyboard 121 appears in the display section 122.

The manual input mode is selected, for example, in the case where there is much noise around the client 11, and at the same time, there are only a few candidates available in the server 12 for the phrase acquired as a recognition result. The user inputs a desired phrase one character at a time using the keyboard 121.

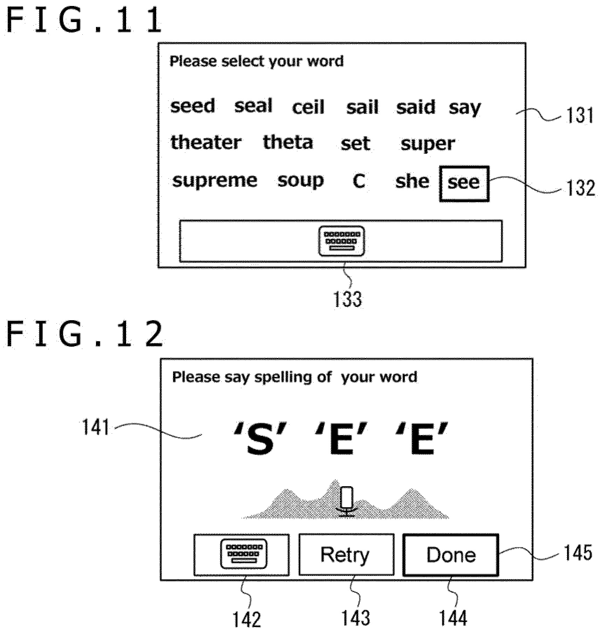

Fig. 11 illustrates an example of an input screen corresponding to the select mode. A display section 131, a cursor 132, and a button 133 appear on this input screen. Candidates for the phrase acquired as a recognition result by the server 12 are displayed side by side in the display section 131. The cursor 132 is used to select a phrase that appears in the display section 131. The button 133 is used to switch to the manual input mode described above with reference to Fig. 10.

The select mode is selected, for example, in the case where there is much noise around the client 11, and at the same time, there are many candidates for the phrase acquired as a recognition result by the server 12. The user can input a desired phrase by selecting a desired phrase from among those presented in the display section 131 using the cursor 132.

Fig. 12 illustrates an example of an input screen corresponding to the single character input mode. A display section 141, buttons 142 to 144, and a cursor 145 appear on this input screen. Characters acquired by voice recognition appear one character at a time on the display section 131. The button 142 is used to move to the manual input mode described above with reference to Fig. 10. The button 143 is used to redo voice recognition. The button 144 is used to finalize a voice recognition result. The cursor 145 is used to select one of the buttons 142 to 144.

The single character input mode is selected, for example, in the case where there is little noise around the client 11. The user inputs, by voice, spelling of a desired word one character at a time. Voice data representing the input voice is sent to the server 12. The server 12 performs voice recognition using a voice recognition engine designed exclusively for single character input and sends the recognition result to the client 11. Then, the recognition result is displayed on the display section 141.

It should be noted that the input mode through ordinary voice recognition will be hereinafter referred to as a normal input mode to distinguish it from the manual input mode, the select mode, and the single character input mode.

The voice recognition control section 41 corrects a recognized sentence in the selected input mode in accordance with user input. Also, the display section 23 presents the corrected recognized sentence under control of the presentation control section 42.

Thereafter, the process proceeds to step S9.

On the other hand, for example, in the case where the user performs an operation to finalize the recognized sentence or to perform voice recognition via the operation section 22 in step S6, the presentation control section 42 determines that the recognition result does not need correction, and the process proceeds to step S9.

In step S9, the voice recognition control section 41 finalizes the recognition result with the current recognized sentence. Then, for example, the voice recognition control section 41 causes the storage section 28 to store the finalized recognition result. Also, for example, the presentation control section 42 causes the display section 23 or the presentation section 24 to present the finalized recognition result. Further, for example, the voice recognition control section 41 sends the finalized recognition result to other apparatus via the communication section 26.

In step S10, the voice recognition control section 41 sends learning data to the server 12 via the communication section 26. For example, the provision of learning data from the client 11 to the server 12 (learning section 72 thereof) is conducted by using an API.

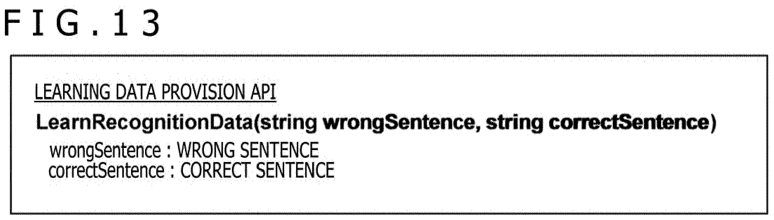

Fig. 13 illustrates an example of LearnRecognitionData(), an API for providing learning data to the server 12.

LearnRecognitionData() takes wrongSentence and correctSentence, both character string types, as arguments. A wrong sentence, i.e., a pre-correction recognized sentence recognized by the first voice recognition is set for wrongSentence. A correct sentence acquired finally by the correction of the recognized sentence is set for correctSentence.

The server 12 receives learning data in step S54 of Fig. 14 which will be described later.

In step S11, the voice recognition control section 41 determines whether or not voice recognition will be continued. For example, the voice recognition control section 41 determines that voice recognition will be continued in the case where the user performs an operation to proceed with the next voice recognition via the operation section 22, the process returns to step S2.

Thereafter, the processes from step S2 to step S11 are repeated until it is determined in step S11 that voice recognition will be terminated.

On the other hand, in step S11, in the case where the user performs an operation to terminate voice recognition via the operation section 22, the voice recognition control section 41 determines that voice recognition will be terminated, and the processes of the client 11 end.

A description will be given next of the processes performs by the server 12 in response to the processes of the client 11 illustrated in Fig. 2 with reference to the flowchart illustrated in Fig. 14.

In step S51, the voice recognition section 71 determines whether or not the performance of voice recognition has been requested. In the case where the client 11 requests the performance of voice recognition by executing StartRecognition() and the request is received via the communication section 61 in step S3 of Fig. 2 described above, the voice recognition section 71 determines that the performance of voice recognition has been requested, and the process proceeds to step S52.

In step S52, the voice recognition section 71 performs voice recognition.

For example, the voice recognition section 71 selects a language model for use for voice recognition on the basis of related information acquired from the client 11. For example, the voice recognition section 71 estimates a phrase frequently used by the user in a current situation on the basis of one or more of a current position of the client 11, a current time, an intended use of voice recognition, a user's current behavior, and a user's current emotion. Then, the voice recognition section 71 selects a language model having a dictionary with a large number of frequently used phrases registered therein.

Also, for example, the voice recognition section 71 selects an acoustic model for use for voice recognition on the basis of voice data acquired from the client 11 and related information. For example, the voice recognition section 71 estimates an acoustic characteristic around the user (e.g., noise level, reverberation characteristic, and so on) on the basis of one or more of voice data, the current position of the client 11, the current time, the type of the client 11, and the voice input system of the client 11. Then, the voice recognition section 71 selects an acoustic model suitable for the estimated acoustic characteristic. Also, for example, the voice recognition section 71 may select an acoustic model suitable for the user identified by the user ID.

Also, the voice recognition section 71 receives voice data sent from the client 11 in step S3 of Fig. 2 via the communication section 61. The voice recognition section 71 performs voice recognition of the input voice represented by the voice data received by using the selected language model and acoustic model and also, as necessary, by using related information. Also, the voice recognition section 71 calculates reliability for the recognition result.

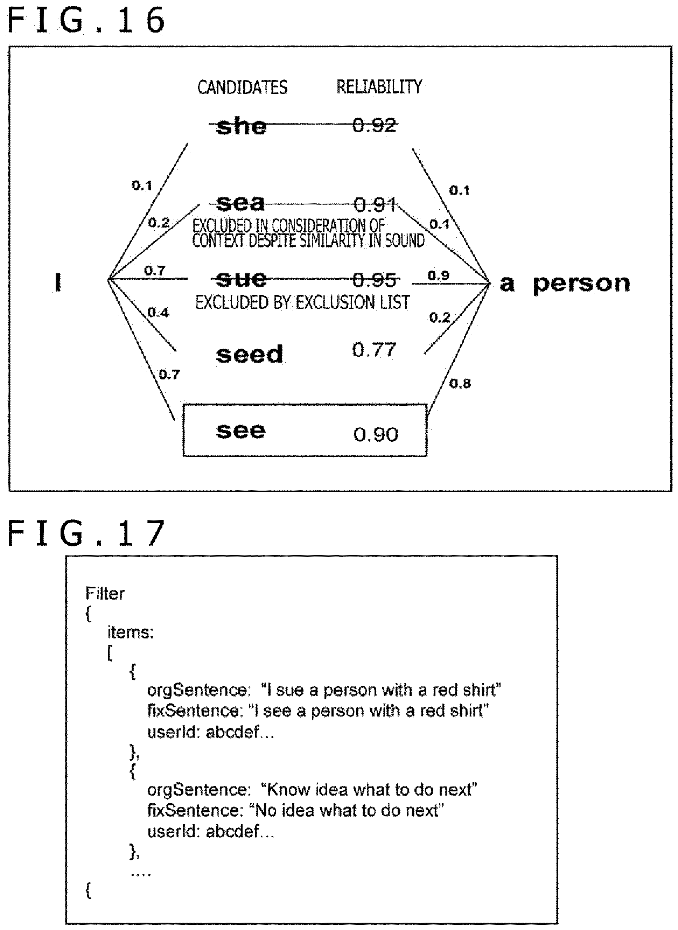

A description will be given here of an example of the voice recognition process performed by the server 12 in response to the recognition result correction process performed by the client 11 described above with reference to Figs. 7 to 9 with reference to Figs. 15 and 16.

As described above, in the examples illustrated in Figs. 7 to 9, a voice saying "see" is input to correct "sue" in "I sue a person with a reed shirt." Also, "sue" is registered in the exclusion list, "I" is registered as the preceding phrase, and "a person" is registered as the succeeding phrase.

For example, the voice recognition section 71 performs voice recognition of an input voice received from the client 11. We assume, as a result, that the candidates for the phrase illustrated in Fig. 15 and reliability for each candidate have been acquired. In this example, five examples, namely, "she," "sea," "sue," "seed," and "see," have been acquired, and the reliabilities of the respective candidates are 0.92, 0.91, 0.95, 0.77, and 0.90.

For example, in the case where a final recognition result is selected on the basis of only reliability, "sue," the candidate with the highest reliability, is selected. That is, the same phrase as was erroneously recognized in the previous voice recognition is acquired as a recognition result.

As illustrated in Fig. 16, on the other hand, the voice recognition section 71 calculates a score representing relevance between "I," the preceding phrase, and each candidate (hereinafter referred to as preceding relevance score). The higher the likelihood for the phrase to appear next to "I," the higher the preceding relevance score, and the lower the likelihood for the phrase to appear next to "I," the lower the preceding relevance score. In this example, the preceding relevance scores for the candidates "she," "sea," "sue," "seed," and "see" are 0.1, 0.2, 0.7, 0.4, and 0.7, respectively.

Also, the voice recognition section 71 calculates a score representing relevance between each candidate and "a person," the succeeding phrase (hereinafter referred to as succeeding relevance score). The higher the likelihood for the phrase to appear prior to "a person," the higher the succeeding relevance score, and the lower the likelihood for the phrase to appear prior to "a person," the lower the succeeding relevance score. In this example, the succeeding relevance scores for the candidates "she," "sea," "sue," "seed," and "see" are 0.1, 0.1, 0.9, 0.2, and 0.8, respectively.

The voice recognition section 71 excludes "sue" that is registered in the exclusion list from the candidates. Then, the voice recognition section 71 selects a final recognition result from among the remaining candidates on the basis of the reliability, the preceding relevance score, and the succeeding relevance score. As a result, "see" all of whose reliability, preceding relevance score, and succeeding relevance score are high is selected. For example, although having higher reliability than "see," "she" and "sea" are excluded in consideration of a relationship with the preceding and succeeding phrases.

Thus, it is possible to provide improved recognition accuracy by excluding the phrase determined to have been erroneously recognized during the previous voice recognition and considering the relationship between a recognition target phrase subject to voice recognition and the phrases before and after the recognition target phrase.

It should be noted that the voice recognition section 71 need not necessarily use all of an exclusion phrase, a preceding phrase, and a succeeding phrase and may perform voice recognition using one or two of these phrases.

Also, the voice recognition section 71 may perform voice recognition on the basis of a tendency in the user's recognition result learned by the learning section 72 as will be described later. For example, the voice recognition section 71 may perform voice recognition using a conversion filter, a personalized filter illustrated in Fig. 17.

Fig. 17 is a diagram illustrating an example of a data structure of a conversion filter. Each record of the conversion filter includes orgSentence, fixSentence, and userId.

A pre-conversion sentence is registered for orgSentence.

A post-conversion sentence is registered for fixSentence.

A user ID for identifying the user to whom a conversion filter is applied is registered for userId.

For example, in the case where the voice recognition result of the user indicated by userId matches the sentence registered for orgSentence, the voice recognition section 71 converts the sentence into that registered for fixSentence. That is, in the case where the user indicated by userId inputs, by voice, the sentence registered for fixSentence, there is a high possibility that the sentence may be erroneously recognized as the sentence registered for orgSentence. For this reason, the voice recognition section 71 automatically corrects the recognition result from the sentence registered for fixSentence to that registered for orgSentence.

Referring back to Fig. 14, in step S53, the voice recognition section 71 sends the recognition result to the client 11 via the communication section 61. For example, the voice recognition section 71 sends the recognition result to the client 11 by executing OnFinalRecognitionResult() described above with reference to Fig. 6.

At this time, the voice recognition section 71 selects, on the basis of internal processing conditions and from among actions that can be set for recommendedBehaviour of OnFinalRecognitionResult(), an action estimated to be highly effective in improving the recognition result and sets the action for recommendedBehaviour.

Thereafter, the process proceeds to step S54.

On the other hand, in the case where it is determined in step S51 that the performance of voice recognition has not been requested, the processes from step S51 to step S53 are skipped, and the process proceeds to step S54.

In step S54, it is determined whether or not the learning section 72 has received learning data. In the case where the client 11 sends learning data by executing LearnRecognitionData() in step S10 of Fig. 2 described above, and in the case where the learning section 72 receives the learning data via the communication section 61, it is determined that the learning data has been received, and the process proceeds to step S55.

In step S55, the learning section 72 performs a learning process. For example, the learning section 72 registers a voice recognition history on the basis of learning data.

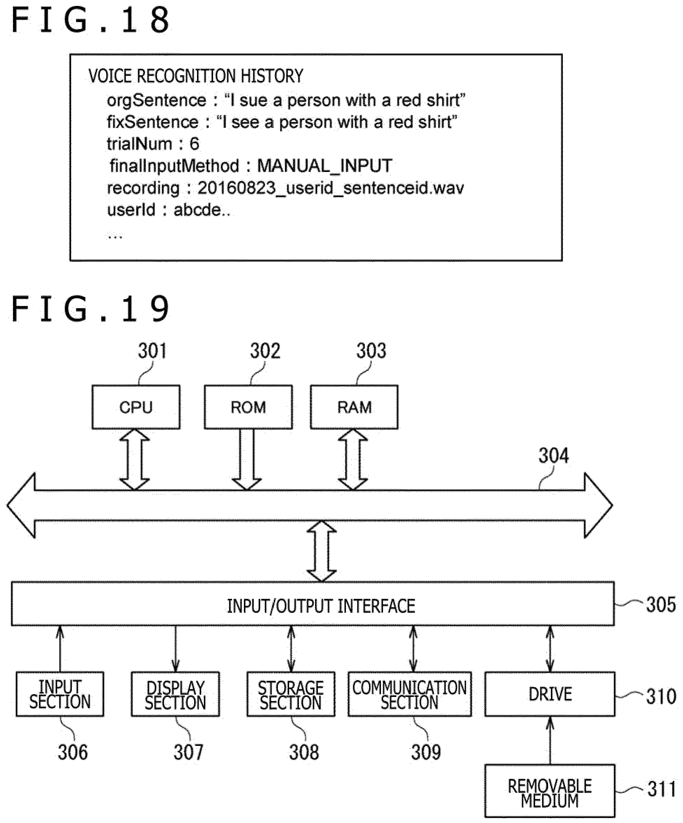

Fig. 18 illustrates an example of a data structure of a voice recognition history. Each record of the voice recognition history is generated for each session and includes orgSentence, fixSentence, trialNum, finalInputMethod, recording, and userId.

A recognized sentence acquired by the first voice recognition of a target session is registered for orgSentence.

A finally finalized recognized sentence (correct sentence) is registered for fixSentence.

The number of attempts of voice recognition is registered for trialNum.

The input mode at the time of finalization of the recognition result is registered for finalInputMethod. For example, one of normal input mode, manual input mode, select mode, and single character input mode is registered. MANUAL_INPUT in this example indicates manual input mode, and it is clear that the sentence corrected finally in manual input mode has been finalized as a recognition result.

Voice data representing the input voice input by the user during the first voice recognition of the target session or a file name of the voice data is registered for recording.

The user who performed the voice recognition, i.e., the user ID for identifying the user who input the voice, is registered for userId.

Also, the learning section 72 refines the voice recognition engine on the basis of the voice recognition history of each user. For example, the learning section 72 refines the acoustic model or language model of the voice recognition engine or personalizes the voice recognition engine by adjusting the engine for each user.

Further, the learning section 72 learns the tendency of the recognition result of each user on the basis of the voice recognition history of the user and generates a conversion filter described above with reference to Fig. 17.

Thereafter, the process returns to step S51, and then the processes from step S51 onwards are repeated.

On the other hand, in the case where it is determined in step S54 that the learning data has not been received, the process returns to step S51, and then the processes from step S51 onwards are performed.

As described above, the voice recognition accuracy improved by using not only an input voice but also related information and each user's learning result. Also, in the case of correction of a recognition result, the user need only input a voice of the phrase that needs correction without reinputting the entire sentence or changing a manner of speech, thereby contributing to reduced burden on the user. This allows the user to speedily acquire a desired voice recognition result.

### <<2. Modification Examples>>

A description will be given below of modification examples of the present technology described above.

### <2-1. Modification Example Relating to the Configuration Example of the System>

The configuration example of the information processing system 10 illustrated in Fig. 1 is merely an example thereof and can be changed as necessary.

For example, some of the functions of the client 11 can be provided in the server 12, and some of the functions of the server 12 can be provided in the client 11.

For example, the learning process may be performed by the client 11. Also, for example, the client 11 may send sensor data and other information to the server 12 so that the server 12 generates some or all of related information.

Further, for example, instead of the server 12 recommending a next action, the client 11 can select a next action on its own.

Also, for example, the client 11 and the server 12 can be combined so that the above processes are handled by a single apparatus.

### <2-2. Modification Example Relating to the Recognition Result Presentation Method>

The recognition result presentation method described above with reference to Fig. 7 is merely an example thereof and can be changed at will.

For example, the units for punctuating a recognition result can be changed to units of words, clauses/phrases, and so on.

Also, for example, a recognition result can be presented without any punctuation.

### <2-3. Modification Example Relating to Related Information>

Related information described above is merely examples thereof, and it is possible to reduce the types of related information to be used or add other related information.

Also, the server 12 can control when to use related information or select which related information to use on the basis of internal conditions of the voice recognition process.

### <<3. Application Example>>

The series of processes described above can be performed by hardware or software. In the case where the series of processes are performed by software, the program included in the software is installed to a computer. Here, the computer includes a computer incorporated in dedicated hardware and a computer capable of performing various functions as a result of installation of various programs such as a general-purpose computer.

Fig. 19 is a block diagram illustrating an example of a hardware configuration of a computer for performing the above series of processes by using a program.

In the computer, a CPU (Central Processing Unit) 301, a ROM (Read Only Memory) 302, and a RAM (Random Access Memory) 303 are connected to each other by a bus 304.

An input/output interface 305 is further connected to the bus 304. An input section 306, an output section 307, a storage section 308, a communication section 309, and a drive 310 are connected to the input/output interface 305.

The input section 306 includes a keyboard, a mouse, a microphone, and so on. The output section 307 includes a display, a speaker, and so on. The storage section 308 includes a hard disk, a non-volatile memory, and so on. The communication section 309 includes a network interface and so on. The drive 310 drives a removable storage medium 311 such as magnetic disk, optical disc, magneto-optical disk, or semiconductor memory.

In the computer configured as described above, the above series of processes are performed, for example, as a result of loading, by the CPU 301, of the program stored in the storage section 308 into the RAM 303 via the input/output interface 305 and the bus 304 for execution.

The program executed by the computer (CPU 301) can be provided in a manner stored, for example, in the removable medium 311 as a packaged media or the like. Alternatively, the program can be provided via a wired or wireless transport media such as local area network, the internet, and digital satellite broadcasting.

The program can be installed to the storage section 308 via the input/output interface 305 by inserting the removable medium 311 into the drive 310. Alternatively, the program can be received by the communication section 309 via a wired or wireless transport media and installed to the storage section 308. In addition to the above, the program can be installed, in advance, to the ROM 302 or the storage section 308.

It should be noted that the program executed by the computer may perform the processes chronologically in accordance with the sequences described in the present specification or may perform them in parallel or individually at a necessary timing as when the program is called.

Also, the above processes may be performed by a plurality of computers in a coordinated manner. Then, the computer system includes one or a plurality of computers for performing the above processes.

Also, in the present specification, a system refers to a set of a plurality of components (e.g., apparatuses, modules (parts), and so on), and it does not matter whether or not all the components are accommodated in the same housing. Therefore, a plurality of apparatuses accommodated in different housings and connected via a network and a plurality of modules accommodated in a single housing are both systems.

It should be noted that embodiments of the present technology are not limited to that described above and can be modified in various ways without departing from the gist of the present technology.

For example, the present technology can have a cloud computing configuration in which a function is processed by a plurality of apparatuses via a network in a shared and cooperative manner.

Also, each of the steps described in the above flowcharts can be performed not only by a single apparatus but also by a plurality of apparatuses in a shared manner.

Further, in the case where one step includes a plurality of processes, the plurality of processes included in that step can be performed not only by a single apparatus but also by a plurality of apparatuses in a shared manner.

Also, the effect described in the present specification is merely illustrative and is not limited, and there may be other effects.

Also, for example, the present technology can have the following configurations.
(1) An information processing apparatus including:
   a voice recognition section adapted to perform voice recognition of a recognition target phrase, a phrase to be recognized, on a basis of an input voice representing the recognition target phrase and phrase information including at least one of a preceding phrase, a phrase previous to the recognition target phrase, or a succeeding phrase, a phrase following the recognition target, in a sentence including the recognition target phrase.
(2) The information processing apparatus according to (1), in which
   the recognition target phrase includes a phrase to be inserted in a portion subject to correction in a sentence presented as a recognition result of previous voice recognition,
   the preceding phrase includes a phrase previous to the portion subject to correction, and
   the succeeding phrase includes a phrase following the portion subject to correction.
(3) The information processing apparatus according to (1) or (2), in which
   the phrase information further includes an exclusion phrase, a phrase to be excluded from a voice recognition result.
(4) The information processing apparatus according to (3), in which
   the exclusion phrase includes a phrase determined to have been erroneously recognized as the recognition target phrase in previous voice recognition.
(5) The information processing apparatus of any one of (1) to (4) further including:
   a communication section adapted to receive related information including the phrase information and the input voice from other information processing apparatus and send a voice recognition result to the other information processing apparatus.
(6) The information processing apparatus according to (5), in which
   the related information further includes at least one of context information regarding context that uses voice recognition in the other information processing apparatus, user information regarding a user using voice recognition, or system information regarding a system that inputs a voice, and
   the voice recognition section performs voice recognition further on a basis of at least one of the context information, the user information, or the system information.
(7) The information processing apparatus according to (6), in which
   the context information includes at least one of information regarding an intended use of voice recognition, a position of the other information processing apparatus, or a current time.
(8) The information processing apparatus according to (6) or (7), in which
   the user information includes at least one of information for identifying the user, information representing a behavior of the user, or information representing an emotion of the user.
(9) The information processing apparatus of any one of (6) to (8), in which
   the system information includes at least one of a type of the other information processing apparatus or a configuration of a voice input system of the other information processing apparatus.
(10) The information processing apparatus of any one of (6) to (9), in which
   the voice recognition section selects at least one of an acoustic model or a language model to be used on a basis of at least one of the context information, the user information, or the system information.
(11) The information processing apparatus of any one of (6) to (10) further including:
   a learning section adapted to learn a tendency of the user's recognition result on a basis of a history of execution of the user's voice recognition, in which
   the voice recognition section performs voice recognition further on a basis of a learning result of the learning section.
(12) The information processing apparatus of any one of (1) to (11), in which
   the voice recognition section selects a final recognition result on a basis of relevance between each candidate acquired as a voice recognition result of the recognition target phrase and at least one of the preceding phrase or the succeeding phrase.
(13) An information processing method including:
   a voice recognition step that performs voice recognition of a recognition target phrase, a phrase to be recognized, on a basis of an input voice representing the recognition target phrase and phrase information including at least one of a preceding phrase, a phrase previous to the recognition target phrase, or a succeeding phrase, a phrase following the recognition target, in a sentence including the recognition target phrase.
(14) An information processing apparatus including:
   a communication section adapted to send, to other information processing apparatus, an input voice representing a recognition target phrase, a phrase to be recognized, and phrase information including at least one of a preceding phrase, a phrase previous to the recognition target phrase, or a succeeding phrase, a phrase following the recognition target phrase, in a sentence including the recognition target phrase and receive, from the other information processing apparatus, a voice recognition result of the recognition target phrase; and
   a presentation control section adapted to control presentation of the recognition result.
(15) The information processing apparatus according to (14), in which
   the recognition target phrase includes a phrase to be inserted in a portion subject to correction in a sentence presented as a recognition result of previous voice recognition,
   the preceding phrase includes a phrase previous to the portion subject to correction, and
   the succeeding phrase includes a phrase following the portion subject to correction.
(16) An information processing method including:
   a transmission control step of controlling the transmission, to other information processing apparatus, of an input voice representing a recognition target phrase, a phrase to be recognized, and phrase information including at least one of a preceding phrase, a phrase previous to the recognition target phrase, or a succeeding phrase, a phrase following the recognition target phrase, in a sentence including the recognition target phrase;
   a reception control step of controlling the reception, from the other information processing apparatus, of a voice recognition result of the recognition target phrase; and
   a presentation control step of controlling the presentation of the recognition result.

### [Reference Signs List]

10 Information processing system, 11 Client, 12 Server, 21 Voice input section, 23 Display section, 24 Presentation section, 25 Sensor section, 26 Communication section, 27 Control section, 41 Voice recognition control section, 42 Presentation control section, 43 Related information acquisition section, 61 Communication section, 62 Control section, 71 Voice recognition section, 72 Learning section

## Claims

1. An information processing apparatus comprising:
a voice recognition section adapted to perform voice recognition of a recognition target phrase, a phrase to be recognized, on a basis of an input voice representing the recognition target phrase and phrase information including at least one of a preceding phrase, a phrase previous to the recognition target phrase, or a succeeding phrase, a phrase following the recognition target, in a sentence including the recognition target phrase.

2. The information processing apparatus of claim 1, wherein
the recognition target phrase includes a phrase to be inserted in a portion subject to correction in a sentence presented as a recognition result of previous voice recognition,
the preceding phrase includes a phrase previous to the portion subject to correction, and
the succeeding phrase includes a phrase following the portion subject to correction.

3. The information processing apparatus of claim 1, wherein
the phrase information further includes an exclusion phrase, a phrase to be excluded from a voice recognition result.

4. The information processing apparatus of claim 3, wherein
the exclusion phrase includes a phrase determined to have been erroneously recognized as the recognition target phrase in previous voice recognition.

5. The information processing apparatus of claim 1 further comprising:
a communication section adapted to receive related information including the phrase information and the input voice from other information processing apparatus and send a voice recognition result to the other information processing apparatus.

6. The information processing apparatus of claim 5, wherein
the related information further includes at least one of context information regarding context that uses voice recognition in the other information processing apparatus, user information regarding a user using voice recognition, or system information regarding a system that inputs a voice, and
the voice recognition section performs voice recognition further on a basis of at least one of the context information, the user information, or the system information.

7. The information processing apparatus of claim 6, wherein
the context information includes at least one of information regarding an intended use of voice recognition, a position of the other information processing apparatus, or a current time.

8. The information processing apparatus of claim 6, wherein
the user information includes at least one of information for identifying the user, information representing a behavior of the user, or information representing an emotion of the user.

9. The information processing apparatus of claim 6, wherein
the system information includes at least one of a type of the other information processing apparatus or a configuration of a voice input system of the other information processing apparatus.

10. The information processing apparatus of claim 6, wherein
the voice recognition section selects at least one of an acoustic model or a language model to be used on a basis of at least one of the context information, the user information, or the system information.

11. The information processing apparatus of claim 6 further comprising:
a learning section adapted to learn a tendency of the user's recognition result on a basis of a history of execution of the user's voice recognition, wherein
the voice recognition section performs voice recognition further on a basis of a learning result of the learning section.

12. The information processing apparatus of claim 1, wherein
the voice recognition section selects a final recognition result on a basis of relevance between each candidate acquired as a voice recognition result of the recognition target phrase and at least one of the preceding phrase or the succeeding phrase.

13. An information processing method comprising:
a voice recognition step of performing voice recognition of a recognition target phrase, a phrase to be recognized, on a basis of an input voice representing the recognition target phrase and phrase information including at least one of a preceding phrase, a phrase previous to the recognition target phrase, or a succeeding phrase, a phrase following the recognition target, in a sentence including the recognition target phrase.

14. An information processing apparatus comprising:
a communication section adapted to send, to other information processing apparatus, an input voice representing a recognition target phrase, a phrase to be recognized, and phrase information including at least one of a preceding phrase, a phrase previous to the recognition target phrase, or a succeeding phrase, a phrase following the recognition target phrase, in a sentence including the recognition target phrase and receive, from the other information processing apparatus, a voice recognition result of the recognition target phrase; and
a presentation control section adapted to control presentation of the recognition result.

15. The information processing apparatus of claim 14, wherein
the recognition target phrase includes a phrase to be inserted in a portion subject to correction in a sentence presented as a recognition result of previous voice recognition,
the preceding phrase includes a phrase previous to the portion subject to correction, and
the succeeding phrase includes a phrase following the portion subject to correction.

16. An information processing method comprising:
a transmission control step of controlling the transmission, to other information processing apparatus, of an input voice representing a recognition target phrase, a phrase to be recognized, and phrase information including at least one of a preceding phrase, a phrase previous to the recognition target phrase, or a succeeding phrase, a phrase following the recognition target phrase, in a sentence including the recognition target phrase;
a reception control step of controlling the reception, from the other information processing apparatus, of a voice recognition result of the recognition target phrase; and
a presentation control step of controlling presentation of the recognition result.
